# EUROPEAN PATENT APPLICATION

(11) **EP 2 801 920 A1**
(43) Date of publication of application: **12.11.2014**
(21) Application number: 14167644.5
(22) Date of filing: 09.05.2014
(51) Int. Cl.: G06F 17/30

(54) **Method and apparatus for displaying web page**

(30) Priority: 09.05.2013 KR 20130052300
(71) Applicant: Samsung Electronics Co., Ltd, Gyeonggi-do 443-742 (KR)
(72) Inventor: Choi, Youngkeun, 443-742 Gyeonggi-do (KR)
(74) Representative: Gover, Richard Paul

(57) **Abstract**

A method and an apparatus for displaying a web page are provided. The method of displaying a web page includes when a request for displaying a first web page is detected, extracting attribute information of the first web page, selecting a predetermined screen reconstruction filter corresponding to the attribute information, and reconstructing and displaying the first web page, based on the screen reconstruction filter.

## Description

### TECHNICAL FIELD

The present disclosure relates to a method and apparatus for displaying a web page. More particularly, the present disclosure relates to a method and apparatus for reconstructing a web page to display an optimized web page.

### BACKGROUND

Mobile terminal have recently been implemented as multimedia devices with a variety of functions, such as taking a photograph or a moving image, playing back a music or video file, playing a game, receiving a broadcast signal, and supporting wireless Internet access. Accordingly, in line with the development of the functions of a mobile terminal, technologies have been developed to satisfy a user's convenience in terms of hardware or software in order to meet the demands of the user of a mobile terminal.

Owing to the development of the wireless Internet supporting technology of a mobile terminal, a user spends more and more time using a web page via a mobile terminal. However, due to a difference in screen size between a mobile terminal and a PC, a user is inconvenienced when displaying and using a web page in a mobile terminal, because effective information contained in the web page, such as a text or an image, is too small to be easily recognized.

To overcome such a problem, web pages dedicated to a mobile terminal have been provided. However, in the case of using a website where web pages dedicated to a mobile terminal are not prepared, the above-mentioned inconvenience remains unsettled. Also, due to intrinsic restrictions in the screen size of a mobile terminal, the content information of a web page cannot be effectively obtained in many cases.

Under such circumstances, in order to effectively obtain the content information of a web page, a user readjusts the size and position of a web page while using the web page. However, in such a case, since an operation of enlarging or moving the contents of a web page's has to be repeated whenever a web page is used, there is inconvenience in using a web page.

Accordingly, there is a need for a technology for displaying a web page such that effective information can be obtained according to a user's intention when a web page is used in a mobile terminal.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an improved method and apparatus for displaying a web page. In particular, the present disclosure relates to a method and apparatus for displaying an optimized web page in enjoying the contents of a web page's by making reference to enlargement and position movement information of previously displayed web pages.

In accordance with an aspect of the present disclosure, a method of displaying a web page is provided. The method includes when a request for displaying a first web page is detected, extracting attribute information of the first web page, selecting a predetermined screen reconstruction filter based on the attribute information, and reconstructing and displaying the first web page, based on the screen reconstruction filter.

In accordance with another aspect of the present disclosure, an apparatus configured to display a web page is provided. The apparatus includes a display unit configured to display a first web page, a detection unit configured to detect a request for displaying the first web page, and a web page display control unit configured to extract attribute information of the first web page when the request for displaying the first web page is detected, to select a predetermined screen reconstruction filter based on the attribute information, and to reconstruct and display the first web page, based on the screen reconstruction filter.

In the method and apparatus for displaying a web page according to the present disclosure, a user's convenience can be improved by automatically reconstructing the size or position of a web page according to the user's intention and displaying the reconstructed web page.

In the method and apparatus for displaying a web page according to the present disclosure, a web page can be reconstructed using a screen reconstruction filter that is predetermined for the same web page or a web page having a correlation greater than or equal to a threshold by using screen reconstruction information of previously visited web pages. Accordingly, information of a web page can be effectively obtained without reconstructing the size or position of the web page through a user's separate input.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram showing a configuration of an apparatus for displaying a web page according to an embodiment of the present disclosure.
FIG. 2 is a flowchart showing a method of displaying a web page according to an embodiment of the present disclosure.
FIG. 3 is a flowchart showing an operation of storing a screen reconstruction filter according to an embodiment of the present disclosure.
FIG. 4 is a view showing attribute information of a web page according to an embodiment of the present disclosure.
FIG. 5 is a flowchart showing an operation of selecting a screen reconstruction filter according to an embodiment of the present disclosure.
FIG. 6 is a view showing a way to compare a correlation between content information of web pages according to an embodiment of the present disclosure.
FIG. 7 is a flowchart showing an operation of reconstructing and displaying a web page according to an embodiment of the present disclosure.
FIGS. 8, 9, and 10 are views showing an example of reconstructing and displaying a web page when the web page is the same as a previously displayed web page according to various embodiments of the present disclosure.
FIGS. 11, 12, and 13 are views showing an example of reconstructing and displaying a web page when the web page belongs to the same layer a previously displayed web page or has certain content correlation with any one of previously displayed web pages according to various embodiments of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present disclosure may be applied to control a method and apparatus for reconstructing and displaying a web page when the web page is displayed in an electronic device.

The present disclosure may be applied not only ti a typical electronic terminal device that provides a web page, such as a smart phone, a portable terminal, a mobile terminal, a Personal Digital Assistant (PDA), a Portable Multimedia Player (PMP), a notepad, a Wibro terminal, a tablet Personal Computer (PC), a computer, or a multimedia device, but also to all types of devices that provide a web page.

It should be noted that the technical terms used herein are merely for the purpose of describing specific various embodiments, and are not intended to limit the technical scope of the present disclosure.

Further, unless defined otherwise, the technical terms used herein should be construed as having meanings commonly understood by those skilled in the art, and should not be construed as having excessively inclusive meanings or excessively exclusive meanings.

As used herein, the singular expressions include the plural expressions as well, unless the context clearly indicates otherwise. Throughout the specification, the terms such as "comprise" and "include" should not be construed as necessarily including all of the various components or steps described in the specification.

Hereinafter, various embodiments of the present disclosure will be described in more detail in conjunction with the accompanying drawings.

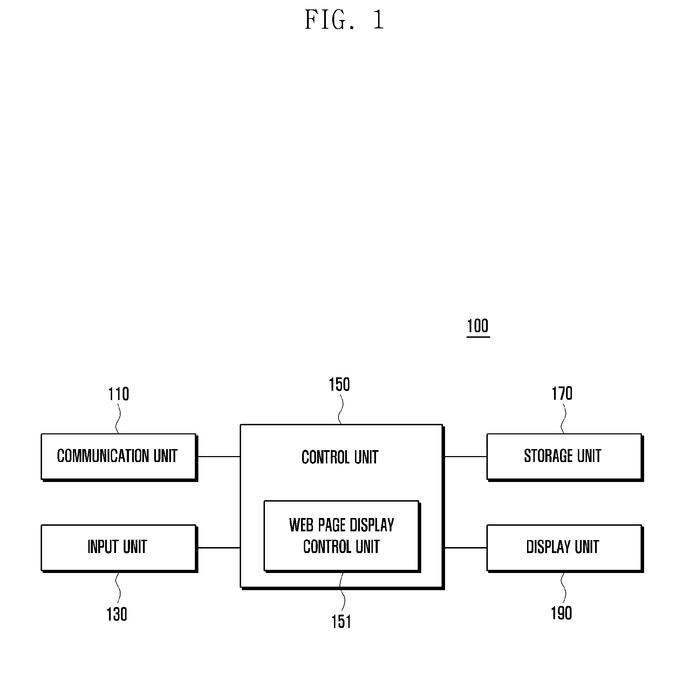

FIG. 1 is a block diagram showing a configuration of an apparatus for displaying a web page according to an embodiment of the present disclosure.

Referring to FIG. 1, the apparatus 100 for displaying a web page may include a communication unit 110, an input unit 130, a control unit 150, a storage unit 170, and a display unit 190.

The communication unit 110 may include at least one module that enables wireless communication between the apparatus 100 for displaying a web page and a wireless communication system or between the apparatus 100 for displaying a web page and a mobile communication system in which the apparatus 100 for displaying a web page is located.

The communication unit 110 transmits/receives a wireless signal to/from at least one of a base station, another apparatus for displaying a web page, and a server on a mobile communication network. The wireless signal may include a voice call signal, a video call signal, or various types of data according to text/multimedia message transmission/reception. The communication unit 110 may exchange data with external devices by using communication technologies such as Wireless LAN (WLAN), Wi-Fi, Wireless broadband (Wibro), World interoperability for microwave access (Wimax), and High Speed Downlink Packet Access (HSDPA).

According to an embodiment of the present disclosure, under the control of the control unit 150, the communication unit 110 may transmit a request message, which requests data on an Internet page, to a server, and may receive a response message, which may include the data on an Internet page, from the server.

The input unit 130 may detect a user input and transmit an input signal corresponding to the user input to the control unit 150. The input unit 130 may include a keypad, a dome switch, a touchpad (resistive type/capacitive type), a jog wheel, a jog switch, a finger mouse, a wheel, and the like.

The input unit 130 may be configured to include a touch sensor, a proximity sensor, an electromagnetic sensor, a pressure sensor, and the like. The input unit 130 may detect a touch input or a proximity input from a user through the corresponding sensor. The input unit 130 may be formed by an input pad in which a film-type sensor is attached on a pad or a panel-type sensor is coupled onto a pad. As an example, the input unit 130 may be formed by an Electro-Magnetic Resonance (EMR) or Electro-Magnetic Interference (EMI)-type input pad using an electromagnetic sensor.

The input unit 130, together with a display unit 190 as described below, may form a layer structure to be operated as an input screen. As an example, the input unit 130 may be formed by a Touch Screen Panel (TSP) that includes an input pad having a touch sensor and is coupled with the display unit 190. The input unit 130 forming a layer structure together with the display unit 190 may be called a touch screen.

According to an embodiment of the present disclosure, the input unit 130 may detect an input corresponding to a request for displaying a web page. Alternatively, the input unit 130 may detect an input for a displayed web page screen.

The input unit 130 may generate a control signal that may include information on the position, input means, input type, and the like of the detected input, and transfer the generated control signal to the control unit 150.

The control unit 150 may control the respective constituent elements for the overall operation of the apparatus 100 for displaying a web page. As an example, the control unit 150 may receive a request for displaying a web page through a user input, and control the display unit 190 to reconstruct the requested web page by using a predetermined screen reconstruction filter and display the reconstructed web page.

In particular, the control unit 150 may include a web page display control unit 151.

According to an embodiment of the present disclosure, upon detecting a request for displaying a first web page, the web page display control unit 151 may extract the attribute information of the first web page, select a predetermined screen reconstruction filter corresponding to the attribute information, and control the display unit 190 to reconstruct and display the first web page, based on the screen reconstruction filter.

According to an embodiment of the present disclosure, when a screen reconstruction event for a second web page occurs, the web page display control unit 151 may generate a screen reconstruction filter, based on the attribute information of the second web page and the screen reconstruction information of the second web page, and control the storage unit 170 to store the generated screen reconstruction filter.

According to an embodiment of the present disclosure, the web page display control unit 151 may compare the correlation between the attribute information of the first web page and the attribute information of the second web page. When the correlation is greater than or equal to a threshold, the web page display control unit 151 may select a screen reconstruction filter corresponding to the first web page from the screen reconstruction filter generated for the second web page.

According to an embodiment of the present disclosure, the web page display control unit 151 may edit the source code of the first web page by using the selected screen reconstruction filter, and display the first web page, based on the edited source code.

According to an embodiment of the present disclosure, the web page display control unit 151 may control the display unit 190 to reconstruct the size and position of the first web page in correspondence with the screen reconstruction filter and display the reconstructed first web page while maintaining the original data of the first web page.

According to an embodiment of the present disclosure, the web page display control unit 151 may extract the size or position reconstruction information of the content included in the second web page, as the screen reconstruction information of the second web page, and control the storage unit 170 to store the extracted reconstruction information.

According to an embodiment of the present disclosure, the web page display control unit 151 may select at least one screen reconstruction filter among a plurality of filters. The plurality of filters may include a filter that is operated when the first and second web pages are the same web page, a filter that is applied when the first and second web pages belong to the same layer, and a filter that is applied when the correlation between the attribute information of the first and second web pages is greater than or equal to a threshold.

According to an embodiment of the present disclosure, the attribute information may include web page content information or web page layer information. The attribute information may be determined based on the source code information of a web page. The web page layer information may be information including the concept of the upper-lower relationship between several groups into which the contents of a web page are divided. As an example, in the case of a news web page, the news home menu tab may correspond to the uppermost layer. Menu tabs for selecting news categories such as politics, economy, society, and weather may correspond to a lower layer than the news tab, and the respective menu tabs for politics, economy, society, and weather may belong to the same layer. In addition, menu tabs for selecting economic news categories such as finance, stocks, and real estate may correspond to a lower layer than the economy tab, and the respective menu tabs for finance, stocks, and real estate may belong to the same layer. The layers of a web page may be recognizable to a user because they are distinguished by frames constituting the web page. The web page content information may include information on the size, number, type, and arrangement of at least one of an image, a text, a moving picture, a blank, a category, and a frame includable in a web page. The attribute information is described below.

A detailed operation of the control unit 150 is described below.

The storage unit 170 may store a program or instructions for the apparatus 100 for displaying a web page. The control unit 150 may execute the program or instructions stored in the storage unit 170.

The storage unit 170 may include at least one type of storage medium among a flash memory type memory, a hard disk type memory, a multimedia card micro type memory, a card type memory (e.g., SD or XD memory), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, and an optical disk.

According to an embodiment of the present disclosure, the storage unit 170 may store information on a web page, received from a web server. The storage unit 170 may also store screen reconstruction filters, attribute information, layer information, and content information.

The display unit 190 displays (outputs) information processed in the apparatus 100 for displaying a web page. As an example, the display unit 190 may display information corresponding to an application, program, or service that is currently running, along with a User Interface (UI) or a Graphic User Interface (GUI).

The display unit 190 may form a mutual layer structure with the input unit 130 to be operated as a touch screen. In this case, the display unit 190 operated as a touch screen may also serve as the input unit.

According to an embodiment of the present disclosure, the display unit 190 may display a web page screen under the control of the control unit 150. The display unit 190 may also display a reconstructed web page screen under the control of the control unit 150.

Although the control unit 150 and the web page display control unit 151 are configured as separate blocks, and the functions performed by the respective blocks have been described above, this is only for the convenience of description, and it is necessary to divide the respective functions in this way. For example, it should be noted that a specific function to be performed by the web page display control unit 151 may be carried out by the control unit 150 itself.

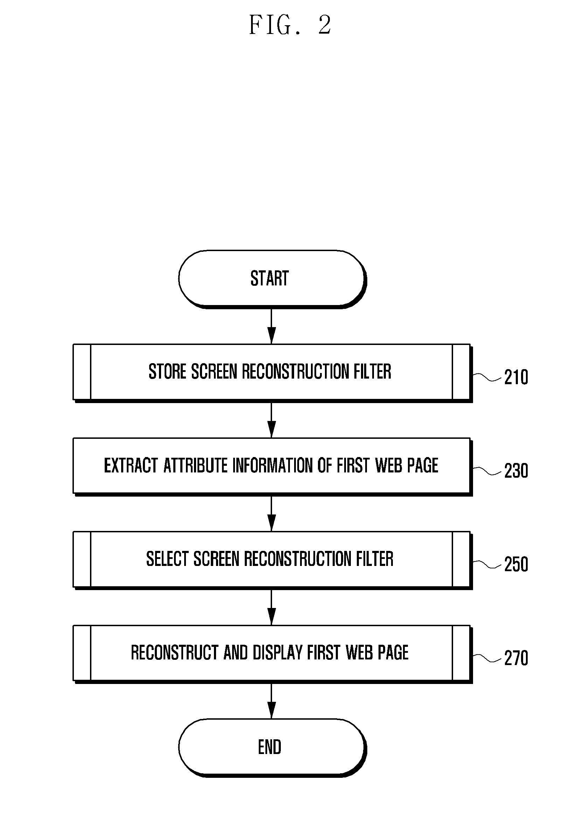

FIG. 2 is a flowchart showing a method of displaying a web page according to an embodiment of the present disclosure.

Referring to FIG. 2, in operation 210, the web page display control unit 151 may store screen information for at least one web page (hereinafter referred to as "second web page"), which has been displayed before a request for displaying a first web page is made, in storage unit 170. The screen information may be a screen reconstruction filter. The web page display control unit 151 may display a second web page, and when a screen reconstruction event occurs in the displayed second web page, may store screen information corresponding to the screen reconstruction event in the storage unit 170. The screen information stored in the storage unit 170 may include the attribute information (e.g., URL, source code, content information, etc.) of the second web page and screen reconstruction information (e.g., content size change information, content position change information, etc.) corresponding thereto.

Operations 210 and 230 are not necessarily performed in succession. For example, it may be sufficient that the screen information is already stored before a point of time when a request for displaying the first web page is made, and these two operations do not need to be necessarily performed in succession in the apparatus for displaying a web page. Also, although an example of storing the screen information has been described in operation 210, a method of storing the screen information is not limited to this example.

In operation 230, the web page display control unit 151 may extract the attribute information of the first web page when a request for displaying the first web page is detected. The attribute information may include the URL information, source code information, and content information of the web page.

A web page is received from an Internet server through the communication unit 110, and is created using HTML (or XHTML), CSS, Java Script, Flash, and the like. A web page may be created based on a web browser environment.

The URL is a logical address for representing the network path of a web page in the Internet, and may be formed according to a protocol such as http, ftp, mailto, file, gopher, telnet, and news.

The source code information refers to information extracted from codes in a programming language such as HTML, XML, or XHTML, which is a language used to create a web page.

A web page may include at least one type of content such as a text, an image, and a moving picture. The content information may include information on the type (image, text, moving picture, etc.), category, size, position, arrangement, frame, number, and the like of the content included in a web page.

The web page display control unit 151 may permanently or temporarily store the extracted attribute information of the first web page in the storage unit 170.

In operation 250, the web page display control unit 151 may select a screen reconstruction filter for reconstructing the first web page. Reconstructing the first web page refers ti changing the size and/or position of the content included in the first web page by making reference to enlargement and/or reduction information or position movement information of previously displayed web pages, rather than displaying, on the display unit 170, the first web page as received from the server through the communication unit 110.

The screen reconstruction filter may be reconstruction information that is applied to a web page for the purpose of reconstruction. Depending on which screen reconstruction filter is selected, a web page may be reconstructed in correspondence with screen reconstruction information set in each filter. Each filter may include a filter that reconstructs the screen of a web page in the same style when the web page is the same web page as one of the previously displayed web pages, a filter that reconstructs the screen of a web page in the style corresponding to the same layer when the web page has the same layer as one of the previously displayed web pages, and a filter that reconstructs a web page in the screen style of a web page having a substantial identity when the correlation between the attribute information of the two web pages is greater than or equal to a threshold. Each filter may also include a filter for reconstructing a content size, a filter for reconstructing a content position, and the like.

The web page display control unit 151 may compare the attribute information of the first web page, extracted from the first web page, with the attribute information of at least one web page (hereinafter referred to as "second web page") that the user has used before a request for displaying the first web page is made. The web page display control unit 151 may select a screen reconstruction filter corresponding to the result of the comparison.

In operation 270, the web page display control unit 151 may reconstruct and display the first web page. The web page display control unit 151 may change the size or position of the content included in the first web page in correspondence with the selected filter, and output the reconstructed first web page. The web page display control unit 151 may change the source code of the first web page, received from the server, and display the reconstructed first web page corresponding to the changed source code. The web page display control unit 151 may change the size and position of the content through a scaler, and display the first web page with the changed content without changing the source code of the first web page, received from the server.

The web page display control unit 151 may use a browser to display a web page. The browser refers to an application that enables services such as search, identification, management, storage, printing, and the like of all information provided through the Internet, and may be a Web browser or a WAP browser. The browser may be a common browser such as Internet Explorer, Opera, Firefox, Chrome, Lunascape, Mozilla, or Safari for an electronic device with a large resource capacity such as a computer, or a micro browser such as Webkit, or Gecko for supporting an Internet function in a mobile environment.

Depending on implementation, the browser may support either the Web or the WAP, or support both the Web and the WAP.

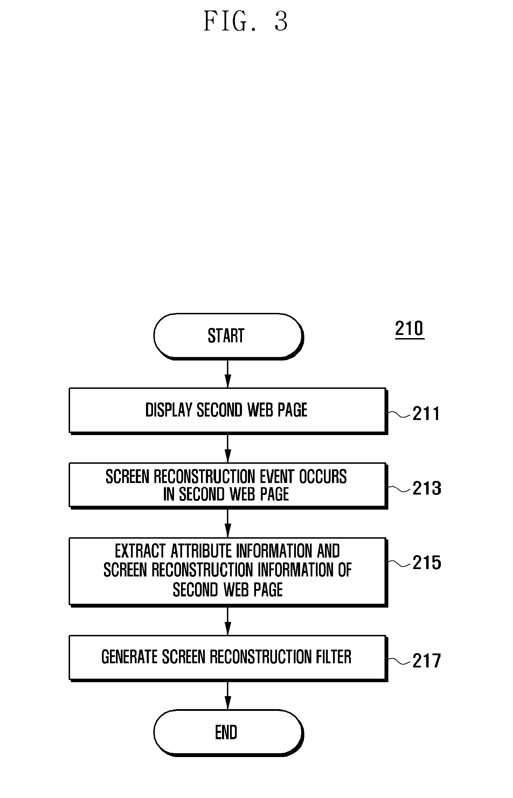

Each operation in FIG. 2 will be described in more detail below with reference to FIGS. 3 to 7.

FIG. 3 is a flowchart showing an operation of storing a screen reconstruction filter according to an embodiment of the present disclosure. In operation 211, the web page display control unit 151 may control the display unit 170 to display the second web page when there is a request for displaying the second web page before a request for displaying the first web page is made.

In operation 213, the web page display control unit 151 may detect whether a screen reconstruction event occurs in the second web page. If the second web page is displayed on the display unit 190 and subsequently the size or position of the content of the displayed second web page is changed, the web page display control unit 151 may recognize that a screen reconstruction event occurs.

When a screen reconstruction event occurs, the web page display control unit 151 may extract the attribute information and screen reconstruction information of the second web page in operation 215. The attribute information may include the URL, layer information, and content information of the second web page. The attribute information may be extracted based on the source code information of the second web page. The screen reconstruction information may include the size change information and position change information of the content included in the second web page.

As an example of extracting the size change information, the web page display control unit 151 may record the font size of a specific text in the second web page and additionally record the font size of the specific text after the occurrence of a screen reconstruction event to extract the content size change information of the second web page. The size change information may correspond to a change in the ratio between font sizes before and after a screen reconstruction event occurs. The web page display control unit 151 may also extract and record the absolute font size of a specific text displayed on the display unit 190 after a screen reconstruction event occurs. In the above example of extracting the size change information, the font size of a text has been described by way of example, but a method of extracting the size change information is not limited to the extraction through a text, and may use any content included in the second web page.

As an example of extracting the position change information, the web page display control unit 151 may record the position information of a specific image in the second web page and additionally record the position information of the specific image after the occurrence of a screen reconstruction event to extract the position change information of the second web page. One method of recording the position change information may include recording information on a change in the absolute coordinate of at least one second web page content displayed on the display unit 190. However, the method of extracting the position change information is not limited to using the absolute coordinate.

If the attribute information and the screen reconstruction information of the second web page are extracted as described above, the web page display control unit 151 may generate a screen reconstruction filter in operation 217, and store the generated screen reconstruction filter in the storage unit 170.

The screen reconstruction filter may be information in which the attribute information of the second web page is combined with the screen reconstruction information corresponding to the attribute information. The storage unit 170 may store a plurality of screen reconstruction filters. As an example, since the second web page refers to all web pages displayed before a request for displaying the first web page is made, the web page display control unit 151 may control the storage unit 170 to store respective screen reconstruction filters for a plurality of second web pages in each of which a screen reconstruction event has occurred before a request for displaying the first web page is made.

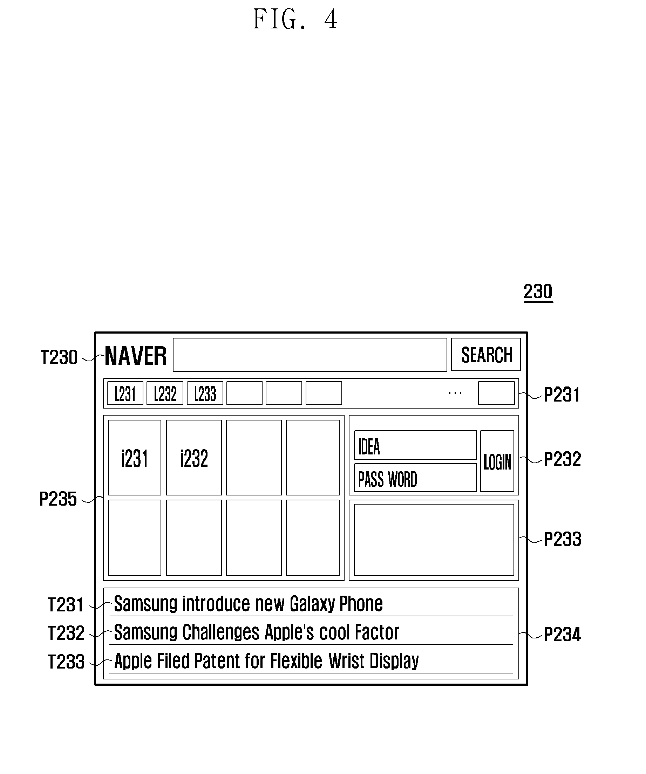

A step of extracting the attribute information of the first web page is described below with reference to FIG. 4.

FIG. 4 is a view showing attribute information of a web page according to an embodiment of the present disclosure.

Referring to FIG. 4, the attribute information may include the URL, layer information, and content information of a web page. Also, the attribute information may be extracted based on the source code of a web page.

The layer information of a web page may be information including the concept of the upper-lower relationship between several groups into which the contents of the web page are divided. As an example, in the web page of FIG. 4, layer 1 P231, layer 2 P232, layer 3 P233, layer 4 P234, and layer 5 P235 may correspond to different layers. Menu 1 L231, menu 2 L232, and menu 3 L233 included in layer 1 belong to the same layer, and text 1 T231, text 2 T232, and text 3 T233 included in layer 4 P234 belong to the same layer. The layer information may be extracted through the source code of the corresponding web page.

The content information may include information on an image, a text, a moving screen, a blank, a category, and a frame included in a web page.

The frame may be a framework that defines the boundary in a web page. In FIG. 4, the web page may include frame 1 P231, frame 2 P232, frame 3 P233, frame 4 P234, and frame 5 P235. The respective frames may define the boundaries between sections in the web page. The frames may simply divide the space of the web page, and each frame may have a different category or character.

The category may be information that describes the character of a web page or the content included therein. As an example, the character of the web page in FIG. 4 may correspond to a portal site called NAVER. Each frame may correspond to a category. For example, frame 1 P231 corresponds to a category representing menu information, frame 2 P232 corresponds to a category representing login information, frame 3 P233 corresponds to a category representing shopping information, frame 4 P234 corresponds to a category representing news information, and frame 5 P235 corresponds to a category representing image information.

The text information is information on the text T230, T231, T232, T233 included in a web page, and may include the font size and position of text. The image information may include information on the size, number, position, and arrangement of images i231, i232 included in a web page.

The blank information may be information on an empty space between the respective content included in a web page.

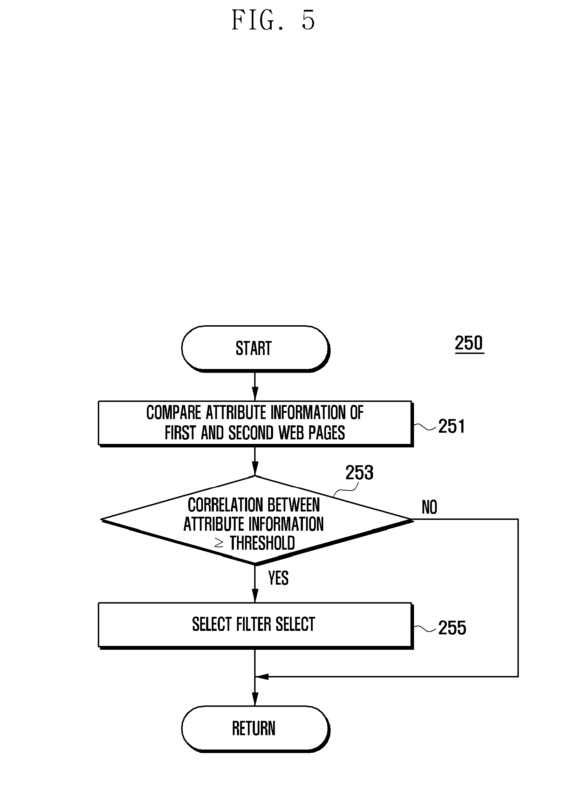

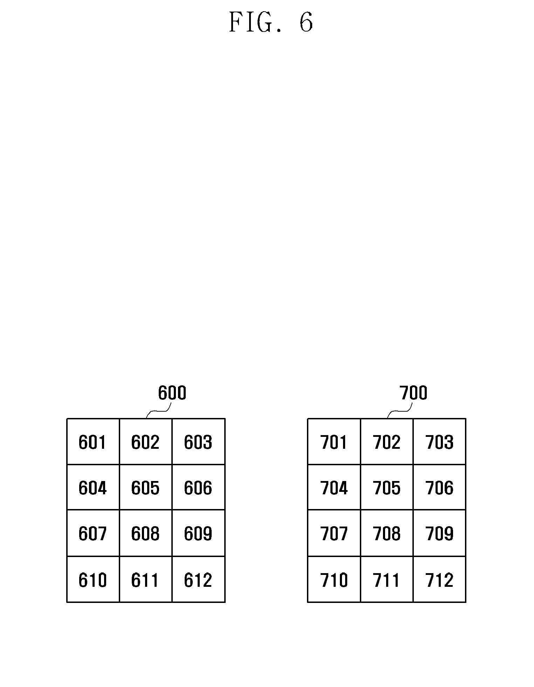

A method of selecting a screen reconstruction filter is described below with reference to FIGS. 5 and 6.

FIG. 5 is a flowchart showing an operation of selecting a screen reconstruction filter according to an embodiment of the present disclosure, and FIG. 6 is a view showing a way to compare a correlation between content information according to an embodiment of the present disclosure.

Referring to FIG. 5, in operation 251, the web page display control unit 151 may compare the attribute information of the first web page with that of the second web page.

The attribute information of the first web page may be the attribute information of the first web page, extracted in operation 230, and the attribute information of the second web page may be the attribute information of the second web page, extracted in operation 210 and stored in the storage unit 170. The web page display control unit 151 may compare the attribute information of the first web page with the attribute information of at least one second web page.

In operation 253, the web page display control unit 151 may determine whether there is a second web page, the attribute information of which has a correlation with the first web page's attribute information of a value greater than or equal to a threshold. The web page display control unit 151 may compare the correlation between the attribute information of the first web page and the attribute information of the second web page in various ways. First, the web page display control unit 151 may compare the attribute information correlation by using a URL. When the URLs of the first web page and the second web page are the same, the web page display control unit 151 may determine that the attribute information correlation is greater than or equal to a threshold. Second, the web page display control unit 151 may compare the attribute information correlation by using layer information. When the result of comparison between the source codes of the first and second web pages shows that both the web pages belong to the same layer, the web page display control unit 151 may determine that the attribute information correlation is greater than or equal to a threshold. Third, the web page display control unit 151 may compare the attribute information correlation by using content information. A method for comparing the attribute information correlation by using content information is described below with reference to FIG. 6.

When there is a second web page, the attribute information of which has a correlation with the first web page's attribute information of a value greater than or equal to a threshold, in operation 255, the web page display control unit 151 may select a screen reconstruction filter corresponding to the second web page with the attribute information correlation of a value greater than or equal to a threshold.

The screen reconstruction filter may be reconstruction information that is applied to a web page in order to reconstruct the web page. Depending on the selected screen reconstruction information, the size and position of the content included in a web page may be reconstructed in correspondence with screen reconstruction information set in each filter.

The screen reconstruction filter may include a plurality of filters. As an example, when the result of comparison of attribute information shows that there is a second web page that is the same as the first web page, the correlation between the attribute information of the first and second web pages may be greater than or equal to a threshold. Accordingly, the web page display control unit 151 may select a screen reconstruction filter corresponding to the second web page.

When the result of a comparison of attribute information shows that there is a second web page that is not the same as the first web page, but belongs to the same layer as the first web page, the correlation between the attribute information of the first and second web pages may be greater than or equal to a threshold. Accordingly, the web page display control unit 151 may select a screen reconstruction filter corresponding to the second web page belonging to the same layer as the first web page. However, even when the first and second web pages belong to the same layer, the correlation between their content information may be lower than a threshold. In this case, rather than a second web page having the same layer information as the first web page, another second web page having a content information correlation of a value greater than or equal to a threshold may be selected among a plurality of second web pages.

When the result of comparison of attribute information shows that there is no web page that is the same as the first web page or belongs to the same layer as the first web page, a screen reconstruction filter corresponding to a second web page having an attribute information correlation of a value greater than or equal to a threshold may be selected based on the content information of the attribute information.

Various methods of comparing the correlation between the content information of web pages may be employed. For example, the content information correlation may be compared using the source codes of first and second web pages. Information on the types, sizes, number, and arrangement of the content included in web pages may be extracted using the source codes of the corresponding web pages, and the content information correlation may be compared using the extracted information.

Referring to FIG. 6, each of the first web page 600 and the second web page 700 may be divided into at least one cell 601-612 and 701-712, respectively, and the correlation between the content information of the divided cells may be compared. While FIG. 6 shows that each web page is divided into twelve cells to be compared, the number of the cells is not limited thereto. A method of selecting cell to be compared will be first described. The correlation between cells in the same row and column of the two web pages may be compared. As an example, the cell 601 in the first row and first column of the first web page 600 may be compared with the cell 701 in the first row and first column of the second web page 700, which is the same position of the second web page 700, and the cell 605 in the second row and second column of the first web page 600 may be compared with the cell 705 in the second row and second column of the second web page 700, which is in the same position of the second web page 700. In addition, the correlation between cells in corresponding positions of the two web pages may be compared. As an example, the cell 601 in the first row and first column of the first web page 600 may be compared with the cell 703 in the first row and third column of the second web page 700, which is in the position corresponding to the cell 605 in the left and right direction, or may be compared with the cell 710 in the third row and first column of the second web page 700, which is in the position corresponding to the cell 605 in the up and down direction.

Next, reference will be made to a process of determining whether the correlation between the content information of selected cells is greater than or equal to a threshold. The types and number of the content included in each cell may be determined through a source code. The attribute of a cell may be characterized by the content that has an area of 70% or greater or is largest in number in the corresponding cell. As an example, the cell 601 in the first row and first column of the first web page 600 may include an image and a text, and when the area occupied by the image in the entire cell is about 70%, the attribute of the cell 601 may be characterized as an image cell. By comparing the attribute of each cell of the first web page 600 with the attribute of the corresponding cell of the second web page 700, it can be recognized whether the attribute of each cell of the first web page 600 is the same as that of the corresponding cell of the second web page 700.

If cell attribute comparison for each cell is possible between the first and second web pages 600, 700, then it is also possible to compare the overall correlation between the first web page 600 and the second web page 700. As an example, when a threshold for the correlation is set to 70%, the correlation may be determined to be greater than or equal to the threshold if 70% or greater of all the cell pairs of the first and second web pages 600, 700 have the same attribute respectively. The numerical value of a threshold is not limited to this example, and may be set to any other value. Also, when at least one of a plurality of second web pages has a correlation with the first web page of a value greater than or equal to a threshold, a screen reconstruction filter corresponding to the second web page having the highest correlation may be selected.

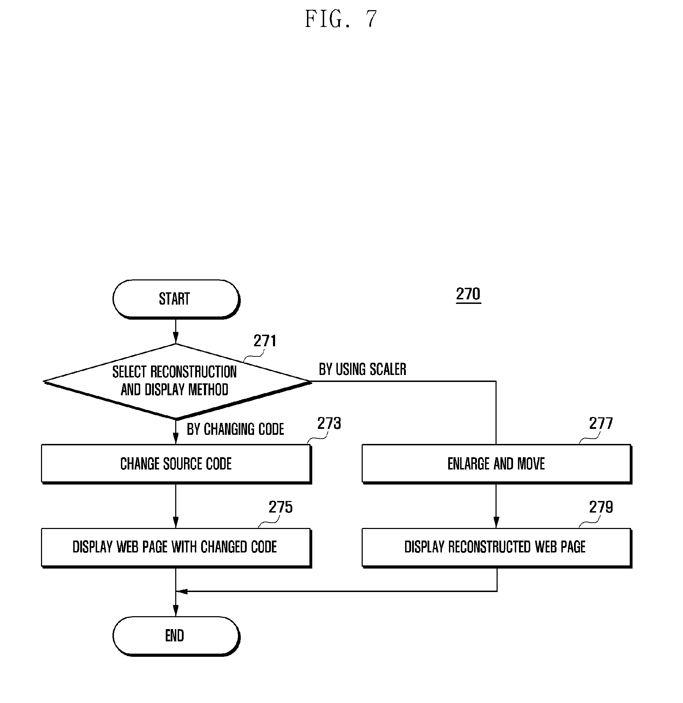

A step of reconstructing and displaying a web page, as shown in FIG. 2, is described below with reference to FIG. 7.

FIG. 7 is a flowchart showing an operation of reconstructing and displaying a web page according to an embodiment of the present disclosure.

Referring to FIG. 7, in operation 271, the web page display control unit 151 may select a method for reconstructing the first web page. As an example, the first web page may be reconstructed by changing the source code of the first web page, received from a server, or by using a scaler. However, the reconstruction method is not limited thereto, and any other reconstruction method mat be selected.

When the method of reconstructing the first web page by changing its source code is selected in operation 271, then in operation 273, the web page display control unit 151 may change the source code of the first web page, received from a server. The web page display control unit 151 may change the source code in correspondence with the screen reconstruction filter selected in operation 250. If the source code is changed, the web page display control unit 151 may control the display unit 190 to display the first web page with the changed source code in operation 275.

When the method of reconstructing the first web page by using a scaler is selected in operation 271, then in operation 277, the web page display control unit 151 may enlarge the size of the first web page, received from a server, and move the position of a region to be displayed through the display unit 190. With regard to this, the web page display control unit 151 may change only the size and position of a region to be displayed through the display unit 190 without changing the source code of the first web page, received from the server. The web page display control unit 151 may change the size and position of the first web page in correspondence with the screen reconstruction filter selected in operation 250. In operation 279, the web page display control unit 151 may control the display unit 190 to display the first web page, the size and position of which have been changed.

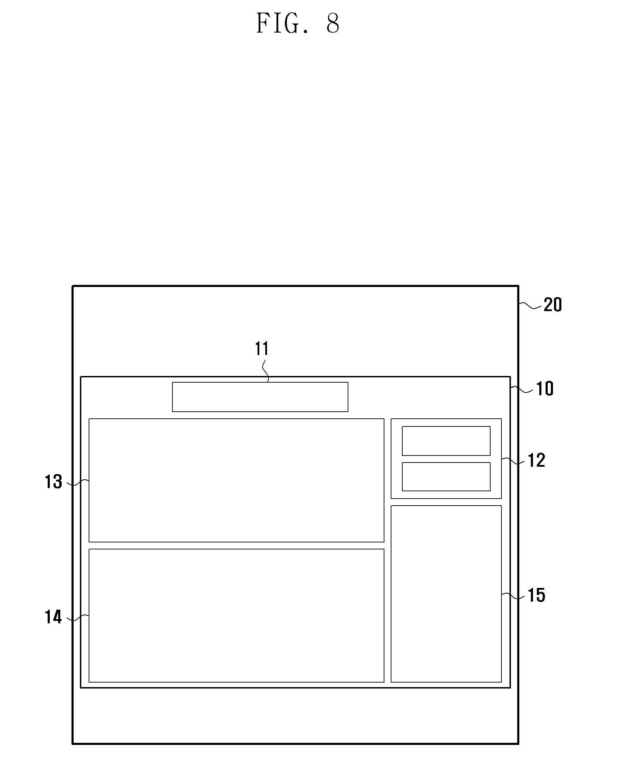

An example of reconstructing and displaying a web page when the web page is the same as any one of previously displayed web pages is described below with reference to FIGS. 8 to 10.

FIGS. 8, 9, and 10 are views showing an example of reconstructing and displaying a web page when the web page is the same as any one of previously displayed web pages according to various embodiments of the present disclosure.

Referring to FIGS. 8 - 10, a first web page 10 may be displayed on the screen 20 of the apparatus 100. The apparatus 100 may display the first web page 10 according to information on the first web page 10, received from a server, unless a screen reconstruction event occurs for the first web page 10 received from the server. Generally, the server may transfer the information on the first web page 10 to the apparatus 100 for displaying a web page such that the entire first web page 10 can be displayed on the screen 20 of the apparatus 100 for displaying a web page, as shown in FIG. 8. However, in such a case, a situation may occur in which the content information of the first web page 10 cannot be effectively obtained. In order to effectively obtain and use the content information of the first web page 10, a user may reconstruct the first web page 10.

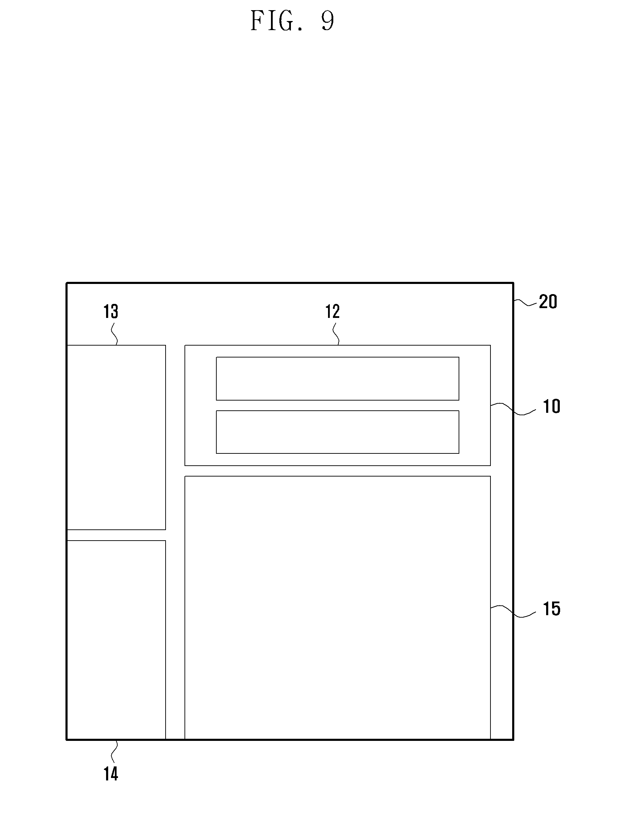

As shown in FIG. 8, the first web page 10 may include at least one frame 11, 12, 13, 14, 15. For example, the first web page 10 may include a login frame 12 and a news frame 14. If a user has reconstructed a second web page identical to the first web page 10 and used the reconstructed second web page before a request for displaying the first web page 10 is made, the apparatus 100 for displaying a web page may store the screen reconstruction information of the second web page. As an example, the screen reconstruction information may correspond to an operation of enlarging the web page and moving the login frame 12 to the center, as shown in FIG. 9. Under the condition that the screen reconstruction filter corresponding to the second web page is stored, when a request for displaying the first web page 10 identical to the second web page is detected, the web page display control unit 151 may select the screen reconstruction filter corresponding to the attribute information of the first web page. Based on the screen reconstruction information of the selected screen reconstruction filter, the web page display control unit 151 may control the display unit 190 to enlarge the first web page 10 and display the login frame 11 in the center portion of the screen 20,

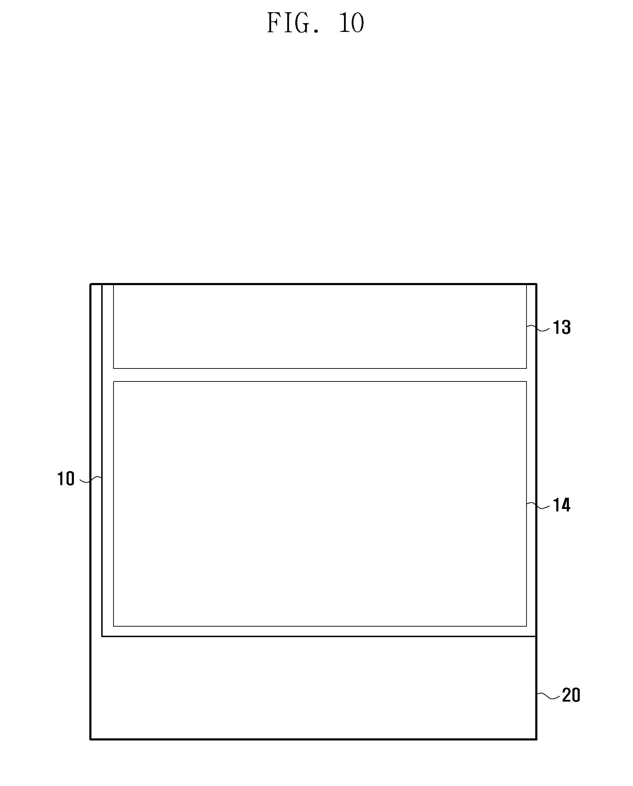

As another example, the screen reconstruction information of the second web page corresponding to the first web page may correspond to an operation of enlarging the web page and moving the news frame 14 to the center, as shown in FIG. 10. In this case, when a request for displaying the first web page 10 identical to the second web page is detected, the web page display control unit 151 may select the screen reconstruction filter corresponding to the attribute information of the first web page 10. Based on the screen reconstruction information of the selected screen reconstruction filter, the web page display control unit 151 may control the display unit 190 to enlarge the first web page 10 and display the news frame 14 in the center portion of the screen 20.

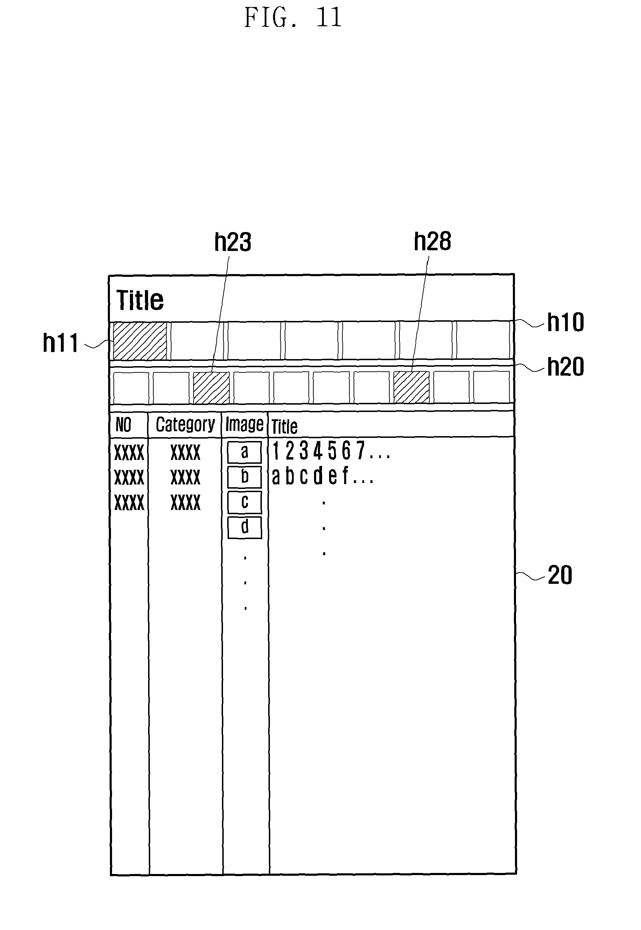

An example of reconstructing and displaying a web page when the web page belongs to the same layer as any one of previously displayed web pages or has a certain content correlation with any one of previously displayed web pages is described below with reference to FIGS. 11 to 13.

FIGS. 11, 12, and 13 are views showing an example of reconstructing and displaying a web page when the web page belongs to the same layer as any one of previously displayed web pages or has certain content correlation with any one of previously displayed web pages according to various embodiments of the present disclosure.

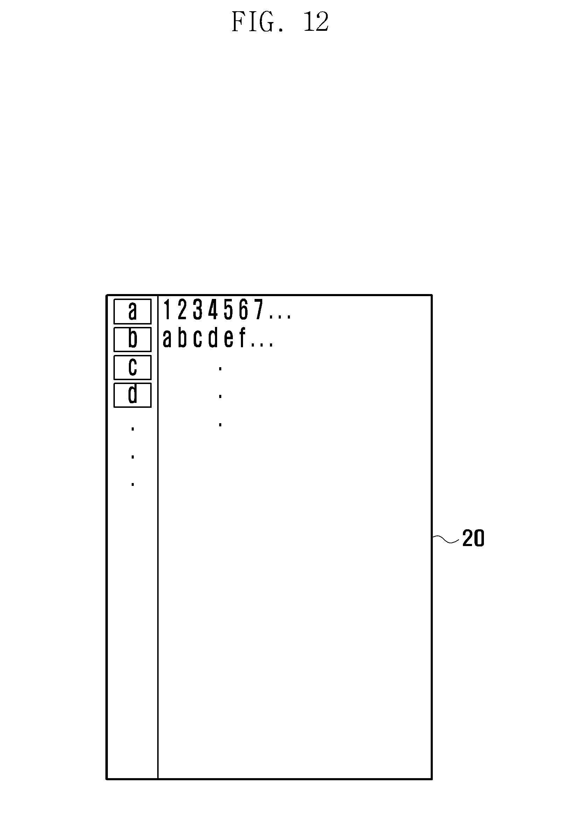

Referring to FIGS. 11 - 13, the web page displayed on the screen may be a web page that is displayed when a user selects h23 belonging to a layer lower than the layer of h11. In order to effectively obtain information on the content required in FIG. 11, a user may enlarge or move the web page. As an example, in order to effectively obtain the content of the web page, a user may reconstruct and display the web page such that the web page is enlarged and the image information is arranged from the upper left end to the lower right end of the screen 20, as shown in FIG. 12. When such a screen reconstruction event occurs, the web page display control unit 151 may extract the attribute information and screen reconstruction information of the web page, and may generate a screen reconstruction filter corresponding thereto and store the generated screen reconstruction filter.

Subsequently, when a request for displaying a first web page identical to the web page of FIG. 11 is made, the first web page is reconstructed and the reconstructed first web page is displayed, as described above in FIGS. 8 to 10.

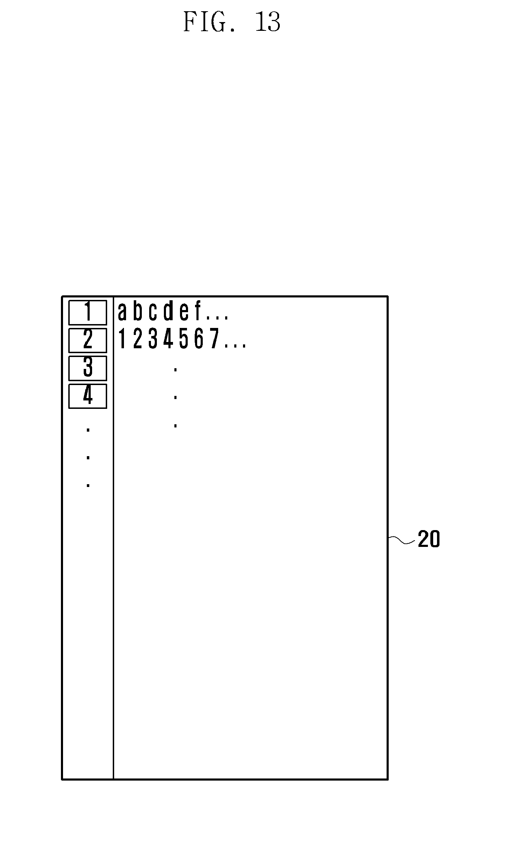

In addition to the case where the first web page is identical to the web page of FIG. 11, the same may also be applied in the case where the first web page is the web page displayed when a user selects h28 in the same layer as h23 in FIG. 11. Since h23 and h28 belong to the same layer, the correlation between their attribute information may be greater than or equal to a threshold. Accordingly, the web page display control unit 151 may reconstruct and display the first web page corresponding to h28 such that the first web page is enlarged and the image information is arranged from the upper left end to the lower right end of the screen 20, as shown in FIG. 13.

In addition to the case where web pages belong to the same layer, a web page may also be reconstructed and displayed in the case where the identity between the content information of web pages is acknowledged. In a preferred embodiment, a web page may include images arranged lengthwise and text corresponding to the respective images and arranged on the right side of the images, as shown in FIG. 11. In this content environment, a user may reconstruct and display the web page such that the web page is enlarged and the image information is arranged from the upper left end to the lower right end of the screen 20. The web page display control unit 151 may generate a screen reconstruction filter corresponding to the screen reconstruction event and store the generated screen reconstruction filter.

When a request for displaying a first web page different from the web page of FIG. 11 is detected, the web page display control unit 151 may compare the attribute information of the first web page with the attribute information of previously displayed web pages. The first web page to be displayed may be a web page including content information in which images are arranged lengthwise and text corresponding to the respective images is arranged on the right side of the images. In such a case, the web page display control unit 151 may select the screen reconstruction filter for h23 of FIG. 11, which includes similar content information. Also, the first web page to be displayed may be reconstructed just as the web page of FIG. 11 is reconstructed into the web page of FIG. 12, and the reconstructed first web page may be displayed as shown in FIG. 13. The first web page may be reconstructed such that the first web page is enlarged and the image information is arranged from the upper left end to the lower right end of the screen 20. The arrangement of the content included in a web page is not limited to the configuration of FIG. 11, and may be configured in various manners.

At this point it should be noted that various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the spirit and the scope of the present disclosure as defined by the appended claims and their equivalents.

## Claims

1. An apparatus configured to display a web page, the apparatus comprising:
a display unit configured to display a first web page;
a detection unit configured to detect a request for displaying the first web page; and
a web page display control unit configured to extract attribute information of the first web page when the request for displaying the first web page is detected, to select a predetermined screen reconstruction filter based on the attribute information, and to reconstruct and display the first web page, based on the screen reconstruction filter.

2. The apparatus of claim 1, further comprising a storage unit configured to store the screen reconstruction filter,
wherein, when a screen reconstruction event for a second web page occurs, the web page display control unit generates a screen reconstruction filter, based on attribute information and screen reconstruction information of the second web page, and stores the generated screen reconstruction filter in the storage unit.

3. The apparatus of claim 2, wherein, when a correlation between the attribute information of the first web page and the attribute information of the second web page is greater than or equal to a threshold, the web page display control unit selects the screen reconstruction filter corresponding to the second web page that has the correlation with the first page of a value greater than or equal to the threshold.

4. The apparatus of claim 1, wherein the web page display control unit edits a source code of the first web page, based on the screen reconstruction filter, and displays the first web page according to the edited source code.

5. The apparatus of claim 1, wherein the web page display control unit reconstructs a size and a position of the first web page, based on the screen reconstruction filter, while maintaining original data of the first web page, and displays the reconstructed first web page.

6. The apparatus of claim 2, wherein the screen reconstruction information of the second web page comprises reconstruction information on sizes or positions of content included in the second web page.

7. The apparatus of claim 2, wherein the screen reconstruction filter comprises a plurality of filters including at least one of a filter that is applied when the first web page is the same as the second web page, a filter that is applied when the first web page and the second web page belong to the same layer, and a filter that is applied when a correlation between the attribute information of the first web page and the attribute information of the second web page is greater than or equal to than a threshold.

8. The apparatus of claim 1, wherein the attribute information comprises at least one of URL information, content information, and layer information of the first web page.

9. The apparatus of claim 8, wherein the layer information is determined based on a source code of the first web page.

10. The apparatus of claim 8, wherein the content information comprises information on at least one of an image, text, a moving picture, a blank, a category, and a frame included in the first web page.

11. A method of displaying a web page, the method comprising:
when a request for displaying a first web page is detected, extracting attribute information of the first web page;
selecting a predetermined screen reconstruction filter based on the attribute information; and
reconstructing and displaying the first web page, based on the screen reconstruction filter.

12. The method of claim 11, further comprising:
storing the screen reconstruction filter before the request for displaying the first web page is made,
wherein the storing of the screen reconstruction filter comprises:
displaying a second web page; and
when a screen reconstruction event occurs in the second web page, generating the screen reconstruction filter, based on attribute information and screen reconstruction information of the second web page.

13. The method of claim 12, wherein the selecting of the screen reconstruction filter comprises:
when a correlation between the attribute information of the first web page and the attribute information of the second web page is greater than or equal to a threshold, selecting the screen reconstruction filter corresponding to the second web page that has the correlation with the first web page of a value greater than or equal to than the threshold.

14. The method of claim 11, wherein the displaying of the first web page comprises:
editing a source code of the first web page, based on the screen reconstruction filter, and
displaying the first web page according to the edited source code.

15. The method of claim 11, wherein the displaying of the first web page comprises:
reconstructing a size and a position of the first web page, based on the screen reconstruction filter, while maintaining original data of the first web page; and
displaying the reconstructed first web page.
